# EUROPEAN PATENT APPLICATION

(11) **EP 3 400 795 A1**
(43) Date of publication of application: **14.11.2018**
(21) Application number: 18386010.5
(22) Date of filing: 07.05.2018
(51) Int. Cl.: A01M 1/02, A01M 1/22

(54) **DEVICE FOR THE PREVENTION OF PALM TREE INSECT INFESTATION USING ELECTRIC CURRENT AND ATTRACTANTS**

(30) Priority: 10.05.2017 GR 20170100212
(71) Applicant: Pseirofonia, Panagiota, 71500 Heraklion, Crete (GR)
(72) Inventor: The designation of the inventor has not yet been filed

(57) **Abstract**

The device for the prevention of palm tree insect infestation using electric current and attractants prevents insects that infest palm trees from depositing their eggs and exterminates them, resulting in the reduction of the area's insect population. It consists of a waterproof box (7) which contains internally a rechargeable battery (1), a processor (4), a transformer (5) and a transceiver with SIM card (9) and externally a solar panel (2), rain sensors (11) and temperature humidity sensors (12), of a protective cover (6) of the palm tree with attached pheromone evaporators (10) and of insulated power cables (3) and a binding and fastening system (8) to the palm tree. The palm tree is pruned and cleared. The protective cover is suspended on the palm tree and attached by ropes. The solar panel and the device's box are placed under the foliage but yet on a sunlit point. When an insect attempts to pass through the holes of the protective cover in order to lay its eggs in the palm tree, the electric circuit will close and current will pass through the insect and it will exterminate it or will cause significant damage to it. The device transmits data to the user via SIM card regarding its performed discharges or any problems in its operation.

## Description

The invention refers to a device which operates with electricity and prevents insects that infest palm trees from depositing their eggs, by exterminating them, resulting in the reduction of the area's insect population.

Today, palm tree insect prevention is carried out using pesticides which are sprayed externally or by the infusion of potent insecticides from the top in very high concentrations, due to the large size of the insects, and, in many cases, using non-approved formulations on palm trees which either are affected or not, to prevent infestations. Given that palm trees are not cultivated by farmers in specific sites away from residential areas, but are plants grown in urban and suburban areas, the preventative use of pesticides for dealing with the insects poses significant risks. In most cases, the treated area is not even marked to keep visitors away. Insecticides are also applied during the flowering season, without cutting the palm tree inflorescence, which also results in bee extermination. Very few formulation users observe the instructions and cut the palm tree inflorescence so as not to attract bees.

Another alternative technique is the placement of insect-proof nets on palm trees. These nets are made of plastic and aim to prevent egg laying at the top of the palm tree. It appears, however, that beetles and butterflies will find a way in, either by chewing through the net or via gaps on its bottom or top part. The method has been deemed ineffective and discontinued.

This invention refers to a device which is placed on a palm tree, operates with direct current and prevents egg-laying by insects that infest palm trees (e.g. *Rhynchophorus ferrugineus, Paysandisia archon, Oryctes* sp, and more). The device exterminates adult insects (mainly females) which attempt to lay eggs in the protected palm trees, as well as males approaching palm trees to feed. The device consists of the Power source, which is a rechargeable battery charged via solar cells, the main system processor (Arduino/Genuino or other processor) along with its components (voltmeter, ammeter, temperature/humidity meter, rain sensors), the high-voltage transformer and the 5-layer protective cover with holes for the palm tree (with indelible color, similar to that of the palm tree or other color and/or printing according to the user's requirements), the means for conducting electricity (insulated cables), and food attractant and/or aggregation pheromone (ethyl acetate and/or ferruginol), depending on the number of palm trees in the area, which is provided via evaporators.

The device can be used for preventing the entry of all insects which infest all kinds of palm trees. The method is advantageous in relation to the use of pesticides for obvious reasons, such as the non-exposure of those present, users, owners and others, to dangerous substances, with minimum environmental impact (including energy consumption). It leaves the plant completely unaffected and does not negatively affect its appearance, while covering and acting throughout the entire potential infestation surface, particularly in relation to the Canary Island date palm. The holes in the palm tree's protective cover have a diameter small to allow only part of the body of the insect infesting palm trees to enter. Given the small size of the holes, any birds, rodents and snails which happen to be on the trunk remain unaffected. Also, the protective cover is smooth so as to prevent rodents and snails from passing and birds from landing, resulting in minimized risks for living organisms which do not constitute targets. Lastly, due to its positioning (on the trunk and far from the inflorescence), bees are not affected. Due to its use on trees which are more than two-and-a-half (2.5) meters tall, the device is rendered harmless for humans.

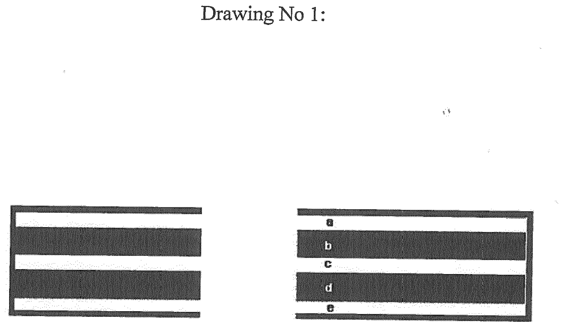

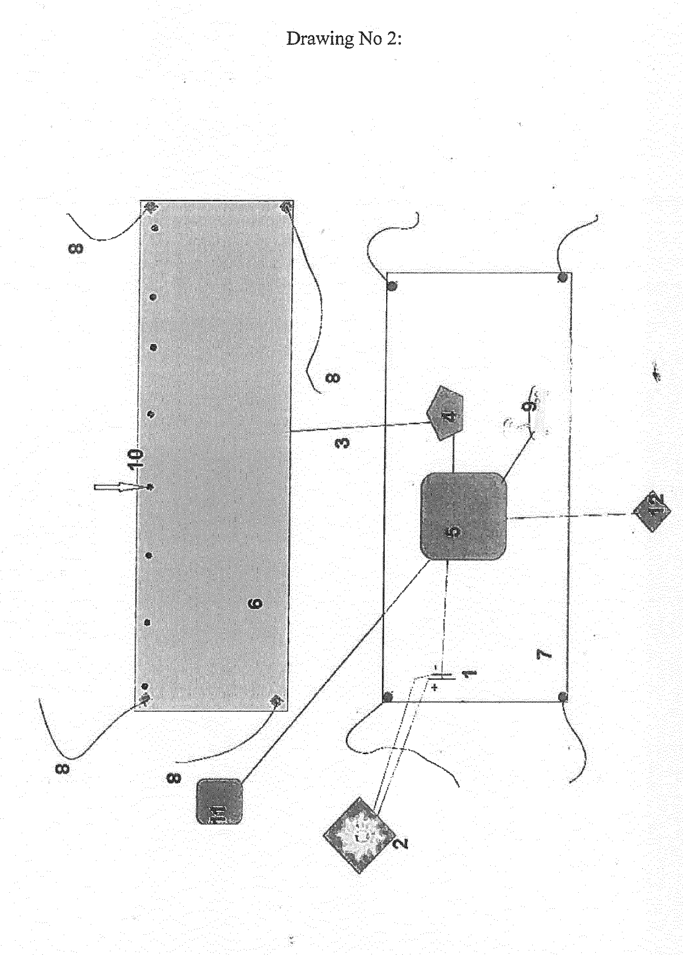

The device which operates with electric current and prevents insects that infest palm trees from laying eggs consists of (Drawing 2): 1) **the rechargeable 12 Volt battery** 2) **the solar panel for charging the battery** 3) **the insulated power cables** which carry the current and connect the device's waterproof box to the protective cover 4) the system **processor** (Arduino/Genuino or other processor), which carries out the safety checking of the system and its components (relay, voltmeter, ammeter), 5) **the transformer** which converts and generates the operating current of the device's protective cover, 6) **the protective cover (or mesh) of the device:** it is a 5-layer material consisting of 3 nonconductive layers of material (e.g. plastic) and 2 conductive layers (metal, e.g. aluminum), alternately (Drawing 1, three nonconductive layers a, c, e and two conductive layers b, d respectively). The cover has more than one hole per square decimeter. 7) **The device's waterproof cover** which contains the battery, the processor, the transformer and the Transceiver. The rain sensor is located on the top part of the box and the rain/humidity meter is on the bottom part. 8) The **System for binding and fastening** it to the palm tree. 9) The **Transceiver with SIM card,** one per device or cumulatively in an area with a relay station for transmitting operating data to the user via SIM card or another relay device. Specifically, device operating data (number of times the circuit closed resulting in insect extermination, operating problems such as the circuit closing too many times in 1 second, indicating a problem with the device, etc.) is sent to the user either via SMS or via an online platform (Internet of Things). 10) The **pheromone evaporators** which gradually release the pheromone and the food attractant for attracting the insect. 11) The system **rain sensor** which deactivates the device in the event of rain, without leaving the palm trees unprotected, as insects stop flying in the rain. 12) The **temperature humidity sensor,** which provides the required temperature and humidity data to the system processor, so that system stops operating in low temperatures (below 5°C) and high relative humidity levels (over 95%), conditions in which insects stop flying. The above components are arranged in two subsystems, the first of which is comprised of the protective cover (6) to whose ends the pheromone evaporators (10) are attached, and the second (subsystem) is comprised of the waterproof box (7) which contains the rechargeable battery (1), the system processor (4), the transformer (5) and the transceiver with SIM card (9), while attached to it externally are the solar panel (2) and the rain sensor (11) on the top part of the box, with the temperature humidity sensor (12) attached to the bottom part of the box. The waterproof box with its attachments and the device's protective cover (or mesh) are connected to each other via the insulated power cables (3) and are attached to the palm tree via harnesses which comprise the binding and fastening system to the palm tree (8).

Drawing (1) depicts the cross-section of the palm tree's protective cover. Drawing (2) depicts the device's assembly. Drawing (3) depicts the device's arrangement on the plant.

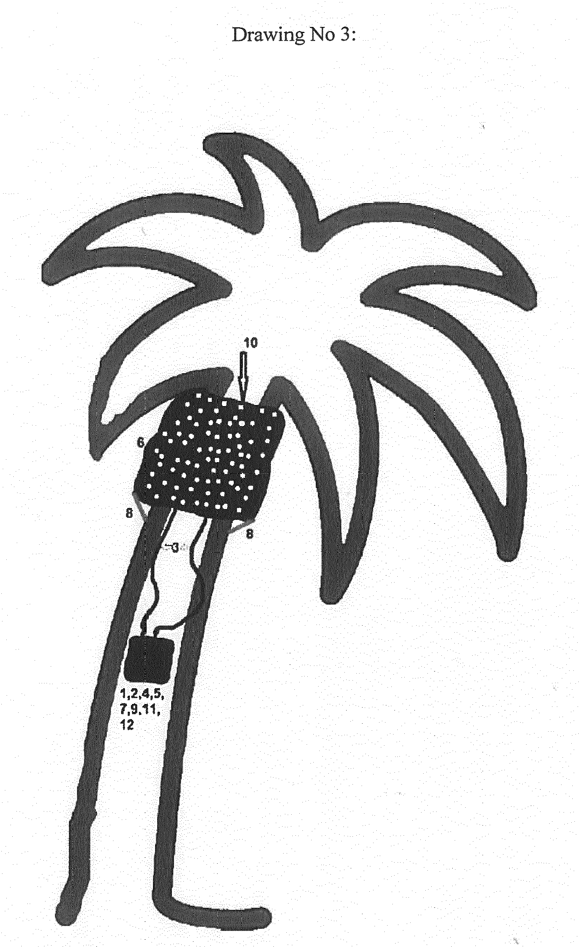

In the case of a series of Canary Island date palms which are located on the island of Crete, given the climate conditions (low relative humidity, high temperatures, long hours of sunshine) the palm tree is pruned and cleared of debris and fibers. The protective cover is suspended on the base of the palm tree's last set of leaves, covering the perimeter of part of the trunk (Drawing 3) and attached via harnesses. The solar panel and the device's box are placed on a lower yet sunlit point of the palm tree's trunk. The device's box is connected to the protective cover via the insulated power cables and is attached to the palm tree. The ferruginol evaporator is placed on the edges of the protective cover (Drawings 2 and 3). The battery is charged and then recharged by the solar panel, while the electric current is passed to the system processor. The system is started and performs a calibration. With this procedure, the system processor regulates the voltage so that the circuit does not close without the presence of a beetle. The device transmits data to the user via SIM card regarding its performed discharges or any problems in its operation.

All insect infestations (with very few exceptions) are carried out where pruning cuts have been made, i.e. in the area where the protective cover is placed. To avoid egg laying in other positions (e.g. inside the foliage), the beetle aggregation pheromone, which is absorbed by an evaporator, will attract it to the protective cover instead of somewhere else. The beetle's typical behaviour is to approach the palm tree, make a small cavity with its snout on the palm tree's mast and then lay its eggs within this cavity. The only open path the insect will find for this process is through the cover's electrified holes. When the insect inserts its snout or any other part of its body in order to make the egg laying cavity, high-voltage current passes through the part of its body currently in the hole. This results in the insect's snout and its base burning and falling off, along with its antennae which are used for orientation. This is highly likely to result in the insect's termination. If, however, despite losing its snout or other organs, the insect still attempts to lay its eggs, inserting its ovipositor in the electrified holes, it will once again close the electric circuit and burn its ovipositor. The device stops operating in the event of rain, high relative humidity and/or low temperature which also coincides with the cessation of insect flights.

## Claims

1. Device for the prevention of palm tree insect infestation using Electric Current and attractants, which exterminates the insects attempting to approach the palm tree trunk, while also reducing the area's insect population and acting preventatively, and which is placed on the palm tree (Drawing 3), operating with continuous electric current and consisting of (Drawing 2): **i)** the rechargeable 12 Volt battery (1), **ii)** the solar panel for charging the battery (2), **iii)** the insulated cables (3), which carry the current a) from the battery to the system's central operating-safety processor and b) from the transformer to the protective cover, **iv)** the system processor (4) (Arduino/Genuino or other processor), which carries out the safety checking of the system and its components (relay, voltmeter, ammeter), **v)** the transformer (5) which converts and generates the operating current of the mesh, **vi)** the protective cover of the palm tree (6), which bears more than one hole per square decimeter, each of which has a size small enough to allow only part of the body of the insect infesting palm trees to enter, **vii)** The device's waterproof box (7) which contains the battery, the processor, the transformer and the Transceiver. The rain sensor is located on the top part of the box and the temperature/humidity meter is on the bottom part, **viii)** The system for binding and fastening it to the palm tree (8), **ix)** The Transceiver with SIM card (9), one per device or cumulatively in an area with a relay station, which collects and transmits the device operating data to the user via SIM card or another relay device, and is remote controlled. Specifically, device operating data (number of times the circuit closed resulting in insect extermination, operating problems such as the circuit closing too many times in 1 second, indicating a problem with the device, etc.) is sent to the user either via SMS or via an online platform (Internet of Things). **x)** The pheromone evaporators (10), which gradually release the pheromone and the food attractant for attracting the insect. **xi)** The system rain sensor (11), which deactivates the device in the event of rain, without leaving the palm trees unprotected, as insects stop flying in the rain and **xii)** The temperature humidity sensor (12), which provides the required temperature and humidity data to the system processor, so that system stops operating in low temperatures (below 5°C) and high relative humidity levels (over 95%), conditions during which insects stop flying. The above components are arranged in two subsystems, the first of which is comprised of the protective cover (6) to whose ends the pheromone evaporators (10) are attached, and the second (subsystem) is comprised of the waterproof box (7) which contains the rechargeable battery (1), the system processor (4), the transformer (5) and the transceiver with SIM card (9), while attached to it externally are the solar panel (2) and the rain sensor (11) on the top part of the box, with the temperature humidity sensor (12) attached to the bottom part of the box. The waterproof box with its attachments and the device's protective cover (or mesh) are connected to each other via the insulated power cables (3) and are attached to the palm tree via harnesses which comprise the binding and fastening system to the palm tree (8).

2. The Device for the prevention of palm tree insect infestation using Electric Current and attractants, in accordance with claim 1, is **characterized by** the fact that: a) it transforms 12V (+/- 10%) direct current to 2000V (+/- 10%) direct current, b) transmits 100µA (+/- 10%) current to the insect and c) transmits 30mJ constant energy (+/- 30%) to the target insect.

3. The Device for the prevention of palm tree insect infestation using Electric Current and attractants, in accordance with claim 1, is **characterized by** the fact that it attracts and exterminates insects attempting to approach the protected area, with pheromone and food attractant, which are gradually released by the evaporators, protecting the palm tree on which the device has been placed, while also reducing the area's insect population infesting the area's palm trees.

4. The Device for the prevention of palm tree insect infestation using Electric Current and attractants, in accordance with claim 1, is **characterized by** the fact that it has a 5-layer protective cover for the palm tree, alternately consisting of 3 nonconductive and 2 conductive layers (Drawing 1: three nonconductive layers a, c, e and two conductive layers b, d respectively), it has the general appearance of an insulated mesh with more than one hole per square decimeter, each of which has a size small enough to allow only part of the body of the insect infesting palm trees to enter.

5. Use of the Device for the prevention of palm tree insect infestation using Electric Current and attractants of claim 1 on palm trees and specifically by placing the protective cover on the base of the last set of leaves, covering the perimeter of part of the trunk and the device's box at a lower point on the trunk (Drawing 3).
